# EUROPÄISCHE PATENTANMELDUNG

(11) **EP 2 401 947 A1**
(43) Veröffentlichungstag der Anmeldung: **04.01.2012**
(21) Anmeldenummer: 11004564.8
(22) Anmeldetag: 04.06.2011
(51) Int. Cl.: A47J 31/44

(54) **Vorrichtung zur Zubereitung von Heißgetränken**

(30) Priorität: 03.07.2010 DE 102010026017
(71) Anmelder: Severin Elektrogeräte GmbH, 59846 Sundern (DE)
(72) Erfinder: Krug, Jörg, 35239 Steffenberg (DE)
(74) Vertreter: Köchling, Conrad-Joachim

(57) **Zusammenfassung**

Um eine Vorrichtung zur Zubereitung von Heißgetränken, insbesondere elektrische Kaffeemaschine, mit einem Gehäuse zur Aufnahme von Funktionskomponenten, einer im Gehäuse angeordneten Brühgruppe zur Aufnahme, zur Verdichtung und zum Durchbrühen von Getränkemehl, sowie einem mit Abstand unterhalb einer Abgabestelle der Brühgruppe für gebrauchtes durchtränktes Getränkemehl in Form von Trester angeordneten Tresterbehälter zu schaffen, bei der eine Verschmutzung von gehäuseinnenliegenden Teilen durch den von der Brühgruppe an den Tresterbehälter abgegebenen Trester weitestgehend vermieden und unterbunden ist, wird vorgeschlagen, dass zwischen der Abgabestelle (3) und dem Tresterbehälter (4) ein trichterartiges Teil (5) lösbar befestigt ist, welches das Gehäuseinnere und im Gehäuse (1) befindliche Komponenten gegen den an der Abgabestelle (3) abgeworfenen Trester abschirmt.

## Beschreibung

Vorrichtung zur Zubereitung von Heißgetränken

Die Erfindung betrifft eine Vorrichtung zur Zubereitung von Heißgetränken, insbesondere elektrische Kaffeemaschine, mit einem Gehäuse zur Aufnahme von Funktionskomponenten, einer im Gehäuse angeordneten Brühgruppe zur Aufnahme, zur Verdichtung und zum Durchbrühen von Getränkemehl, sowie einem mit Abstand unterhalb einer Abgabestelle der Brühgruppe für gebrauchtes durchtränktes Getränkemehl in Form von Trester angeordneten Tresterbehälter.

Insbesondere betrifft die Erfindung eine vollautomatische elektrische Kaffeemaschine, in deren Gehäuse entsprechende Funktionskomponenten angeordnet sind, um ein Brühgetränk zu erzeugen, beispielsweise Kaffee. Um ein entsprechendes Brühgetränk zu erzeugen, ist in dem Gehäuse insbesondere eine Brühgruppe angeordnet. Eine solche Brühgruppe ist so angeordnet und ausgestattet, dass sie dazu geeignet ist, zunächst Kaffeemehl oder dergleichen aufzunehmen, welches dann innerhalb der Brühgruppe verdichtet wird. In der, in dieser Situation geschlossenen Brühkammer der Brühgruppe wird dann das verdichtete Getränkemehl von heißem Frischwasser durchtränkt und das entsprechende Getränk wird über eine Abgabeöffnung der Maschine abgegeben. Nach Beendigung des Brühvorganges wird die Brühgruppe automatisch geöffnet und das gebrauchte durchtränkte Kaffeemehl wird in Form von Trester aus einer Öffnung der Brühgruppe abgeworfen. Dieser Trester fällt in einen innerhalb des Gehäuses angeordneten Tresterbehälter, der vorzugsweise entnehmbar in dem Gehäuse angeordnet ist. In dem Tresterbehälter kann entsprechender Trester von mehreren Brühvorgängen gesammelt werden und dann bei Erreichen eines bestimmten Füllstandes des Tresterbehälters entleert werden.

Ein Nachteil einer solchen Anordnung ist, dass zwischen der Abgabestelle der Brühgruppe, an welcher der Trester abgegeben wird, und dem Tresterbehälter ein relativ großer Freiraum (Abstand) besteht, so dass innerhalb des Maschinengehäuses befindliche Elemente durch den von der Brühgruppe abgegebenen Trester verschmutzt werden können. Die Verschmutzung der innen liegenden Gehäuseteile der Maschine ist unerwünscht, da diese praktisch nicht zu erreichen sind und nur schwer, wenn überhaupt gereinigt werden können.

Ausgehend von diesem Stand der Technik liegt der Erfindung die Aufgabe zugrunde, eine Vorrichtung gattungsgemäßer Art zu schaffen, bei der eine Verschmutzung von gehäuseinnenliegenden Teilen durch den von der Brühgruppe an den Tresterbehälter abgegebenen Trester weitestgehend vermieden und unterbunden ist.

Zur Lösung dieser Aufgabe schlägt die Erfindung vor, dass zwischen der Abgabestelle und dem Tresterbehälter ein trichterartiges Teil lösbar befestigt ist, welches das Gehäuseinnere und im Gehäuse befindliche Komponenten gegen den an der Abgabestelle abgeworfenen Trester abschirmt.

Das trichterartige Teil ist so zwischen der Abgabestelle und dem Tresterbehälter angeordnet, dass der aus der Brühgruppe abgegebene Trester durch die Wandungen des trichterartigen Teiles nach außen abgeschirmt ist, also nicht in das Geräteinnere der Maschine gelangen kann.

Vorzugsweise ist das trichterartige Teil lösbar befestigt, damit das bei der bestimmungsgemäßen Benutzung durchaus verschmutzende trichterartige Teil aus der Maschine entnommen und gereinigt werden kann.

Das trichterartige Teil ist insbesondere derart ausgebildet und ausgestaltet, dass die umliegenden inneren Gehäuseteile abgeschirmt sind, also eine Verschmutzung dieser innen liegenden Gehäuseteile durch den herabfallenden Trester nicht erfolgen kann.

Besonders bevorzugt ist dabei vorgesehen, dass das trichterartige Teil mit einer ersten Wandung an die Abgabestelle der Brühgruppe mindestens nahezu spaltfrei angeschlossen ist.

Die Brühgruppe hat üblicherweise eine entsprechende Ausnehmung mit Wandungsteilen, die die Abgabestelle oder den Abgabeschacht bilden, durch den beziehungsweise durch die der Trester abgegeben wird. Das trichterartige Teil schließt mit einer ersten Wandung an diese Abgabestelle an, so dass eine Verschmutzung des Innenraums der Maschine in diesem Bereich unterbunden ist.

Darüber hinaus ist bevorzugt vorgesehen, dass das trichterartige Teil mit einer der ersten Wandung gegenüberliegenden zweiten Wandung über eine Lagerkante des Gehäuses oder der Brühgruppe greift und auf dieser abgestützt ist.

Durch diese Anordnung ist einerseits sichergestellt, dass das trichterartige Teil in einer bestimmten Sollposition innerhalb einer Ausnehmung der Maschine angeordnet werden kann, wobei das trichterartige Teil einerseits der ersten Wandung an Bereichen der Abgabestelle der Brühgruppe gehalten ist und andererseits auf einer Lagerkante des Gehäuses abgestützt ist, so dass eine sichere Positionierung erreicht wird.

Bevorzugt ist dabei vorgesehen, dass an der zweiten Wandung eine Griffkante zur Manipulation des trichterartigen Teils ausgebildet ist.

Durch diese Ausbildung ist es für den Benutzer in einfacher Weise möglich, das trichterartige Teil an der Griffkante zu erfassen, um dieses aus dem Innenraum der Maschine zu entnehmen, beispielsweise zum Zwecke der Reinigung.

Um eine vollständige Abschirmung des Innenraums der Maschine gegenüber dem Trester zu erreichen, ist zudem vorgesehen, dass die erste und zweite Wandung des trichterartigen Teils durch Seitenwandungen miteinander verbunden sind.

Obwohl die Form des trichterartigen Teils beliebig gestaltet werden kann, ist eine etwa quaderförmige Ausgestaltung dieses Teils bevorzugt, weil dies den örtlichen Gegebenheiten innerhalb der entsprechenden Vorrichtung am besten entspricht.

Des Weiteren ist bevorzugt vorgesehen, dass im vom trichterartigen Teil gebildeten Durchlass für den Trester mindestens ein Steg ausgebildet ist, mittels dessen der von der Abgabestelle der Brühgruppe abgeworfene Trester zerteilt wird.

Diese Ausgestaltung, die als selbständig erfinderisch angesehen wird, dient dazu, den von der Brühgruppe herabfallenden Trester zu teilen, so dass dieser nicht als kompakte Scheibe in dem Tresterbehälter abgelegt wird und möglicherweise aufeinander gestapelt wird, so dass schnell die maximale Füllhöhe des Tresterbehälters erreicht wird, sondern der kuchenartige Trester wird durch den Steg beim Herabfallen zerteilt, so dass ein höherer Füllungsgrad des Tresterbehälters erreicht werden kann.

Zudem kann hierbei vorgesehen sein, dass der Steg mittig im Durchlass des trichterartigen Teils ausgebildet ist.

Vorzugsweise ist dabei vorgesehen, dass der Steg am in Fallrichtung des Tresters hinteren Endbereich des Durchlasses vorgesehen ist.

Hierdurch wird erreicht, dass das Aufteilen des Tresters nicht an der Eingangsmündung des trichterartigen Elementes erfolgt, sondern nahe dessen Auslassbereich, wobei der Bereich, in dem der Steg angeordnet ist, ringsum von Wänden des trichterartigen Teiles umgeben ist, so dass hier eine Verschmutzung der umgebenden Maschinenteile unterbunden ist.

Zudem ist bevorzugt vorgesehen, dass der Steg eine Handhabe zur Manipulation des trichterartigen Teils bildet.

Diese Ausbildung dient dazu, dass der Benutzer gegebenenfalls das trichterartige Teil in der Weise entnehmen kann, dass er das Element an dem Steg erfasst und somit aus der entsprechenden Öffnung der Maschine entnimmt.

Gegebenenfalls kann auch bevorzugt vorgesehen sein, dass der Steg zur Abgabestelle der Brühgruppe hin scharfkantig ausgebildet ist.

Hierdurch wird eine gute Teilung des herabfallenden Tresters erreicht.

Zudem ist vorgesehen, dass das Gehäuse eine mittels eines Gehäuseteils verschließbare Öffnung aufweist, hinter der das trichterartige Teil angeordnet und bei freigelegter Öffnung zugreiflich ist.

Hierdurch wird erreicht, dass die Einbauöffnung, durch welche das trichterartige Teil zugänglich ist, bei normaler Gebrauchslage der Vorrichtung verschlossen ist, also die Innereien der Maschine nicht sichtbar sind.

Ein Ausführungsbeispiel ist in der Zeichnung dargestellt und im Folgenden näher beschrieben. Es zeigt:
- Figur 1: ein Detail einer entsprechenden Vorrichtung zur Zubereitung von Heißgetränken;
- Figur 2: eine Einzelheit in Ansicht.

In der Zeichnung sind die in diesem Zusammenhang wesentlich interessierenden Teile einer Vorrichtung zur Zubereitung von Heißgetränken, insbesondere einer elektrischen Kaffeemaschine gezeigt. Diese weist ein Gehäuse 1 auf, welches diverse Funktionskomponenten aufnimmt. In dem Gehäuse 1 ist eine Brühgruppe 2 angeordnet, die zur Aufnahme von beispielsweise Kaffeemehl dient. Das von der Brühgruppe aufgenommene Kaffeemehl wird innerhalb der Brühgruppe verdichtet und mit Heißwasser durchtränkt, so dass auf der Vorderseite der Maschine, die in der Zeichnung nicht ersichtlich ist, ein Heißgetränk abgenommen werden kann. Die Brühgruppe 2 weist zudem eine Abgabestelle 3 für gebrauchtes durchtränktes Getränkemehl in Form von Trester auf. Wenn die Brühgruppe geöffnet wird und das Getränkemehl in Form einer Tresterscheibe ausgeworfen wird, so fällt dies in einen darunter mit Abstand angeordneten Tresterbehälter 4. Der Tresterbehälter 4 ist von der Vorderseite der Vorrichtung her entnehmbar.

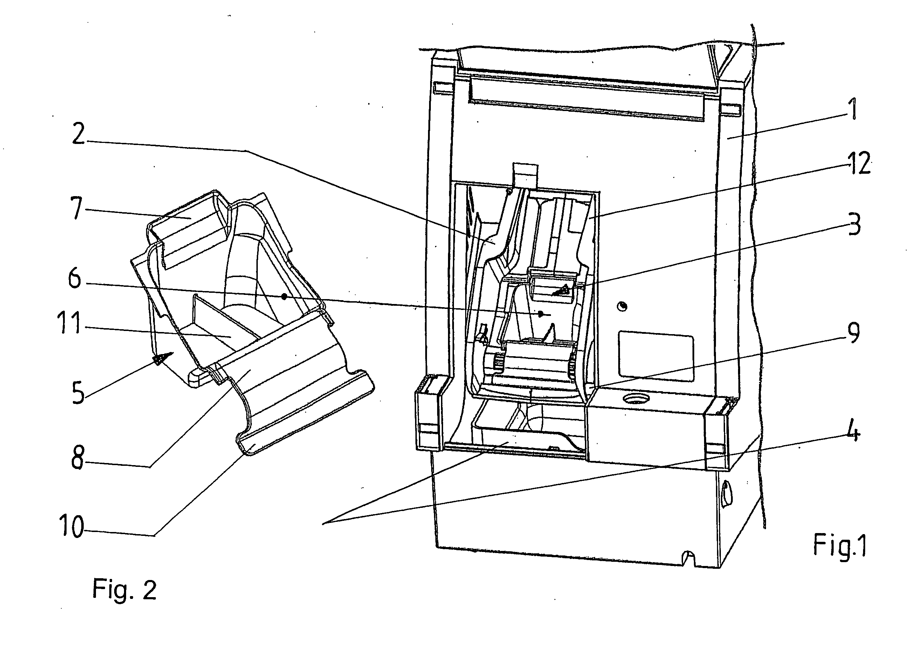

Damit beim Abwerfen des Tresters keine Innenteile der Vorrichtung verschmutzt werden, ist in den Abstand, der zwischen der Abgabestelle und dem Tresterbehälter 4 ausgebildet ist, ein trichterartiges Teil 5 eingesetzt, wie durch den Bewegungspfeil 6 angegeben. In der Figur 1 ist dieses trichterförmige Teil 5 in seiner Solllage gezeigt. Dieses deckt in der dargestellten Solllage das Gehäuseinnere gegen den durchfallenden Trester ab, so dass das Gehäuseinnere und die im Gehäuseinneren befindlichen Komponenten nicht durch den Trester verschmutzt werden können, sondern gegenüber diesem abgeschirmt sind.

Insbesondere ist das trichterartige Teil 5 mit einer ersten Wandung 7 an die Abgabestelle der Brühgruppe 2 spaltfrei angeschlossen. Die der ersten Wandung 7 gegenüberliegende zweite Wandung 8 ist über eine Lagerkante 9 des Gehäuses 1 oder der Brühgruppe 2 positioniert und auf dieser abgestützt, so dass eine sichere Positionierung in der Montagesolllage, die in Figur 1 dargestellt ist, erreicht wird.

Zusätzlich kann die zweite Wandung 8 eine Griffkante 10 zur Manipulation des trichterartigen Teiles 5 aufweisen. Diese Kante 10 kann durch die Hand des Benutzers erfasst werden, um das trichterartige Teil 5 zu positionieren oder zu entnehmen.

Wie insbesondere aus der Darstellung gemäß Figur 2 ersichtlich, ist die erste Wandung 7 und die zweite Wandung 8 durch Seitenwandungen miteinander verbunden, so dass insgesamt ein quaderförmiges trichterartiges Element entsteht.

In dem vom trichterartigen Teil 5 gebildeten Durchlass für den Trester ist ein Steg 11 ausgebildet, mittels dessen der von der Abgabestelle der Brühgruppe 2 abgeworfene Trester zerteilt wird, so dass dieser nicht in kompakter Kuchenform, sondern in zerbröselter Form in den Tresterbehälter 4 abgeworfen wird.

Vorzugsweise ist der Steg 11 mittig im Durchlass des trichterartigen Teils 5 ausgebildet, und zwar am in Fallrichtung des Tresters hinteren Endbereich des Durchlasses. Der Steg 11 bietet zusätzlich auch eine Handhabe zur Manipulation des trichterartigen Teiles 5, um dieses zu entnehmen oder in die Sollposition einzufügen.

Bevorzugt verläuft der Steg 11 parallel zu den Seitenwandungen des trichterartigen Teiles. Vornehmlich ist die der Abgabestelle der Brühgruppe 2 zugewandte Randkante des Steges 11 scharfkantig ausgebildet, um den Zerteilungsvorgang des herabfallenden Tresters zu erleichtern.

Das Gehäuse 1 weist im Bereich der Anordnung des trichterartigen Teiles 5 eine verschließbare Öffnung 12 auf, hinter der das trichterartige Teil 5 angeordnet ist und bei freiliegender Öffnung zugreiflich ist. Die Öffnung 12 kann mittels einer geeigneten Klappe geschlossen werden, so dass im Normalgebrauchszustand die Öffnung 12 nicht ersichtlich ist.

Durch die erfindungsgemäße Ausgestaltung wird erreicht, dass schlecht zu reinigende Gehäuseteile sauber bleiben, dass das hierzu dienende trichterartige Teil 5 leicht entnehmbar und leicht zu reinigen ist, wobei ein Steg zum Teilen des Tresters ausgebildet ist und der Steg auch zur leichten Entnahme und Manipulation des trichterartigen Teiles 5 benutzt werden kann.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Vorrichtung zur Zubereitung von Heißgetränken, insbesondere elektrische Kaffeemaschine, mit einem Gehäuse (1) zur Aufnahme von Funktionskomponenten, einer im Gehäuse angeordneten Brühgruppe (2) zur Aufnahme, zur Verdichtung und zum Durchbrühen von Getränkemehl, sowie einem mit Abstand unterhalb einer Abgabestelle (3) der Brühgruppe (2) für gebrauchtes durchtränktes Getränkemehl in Form von Trester angeordneten Tresterbehälter (4), **dadurch gekennzeichnet, dass** zwischen der Abgabestelle (3) und dem Tresterbehälter (4) ein trichterartiges Teil (5) lösbar befestigt ist, welches das Gehäuseinnere und im Gehäuse (1) befindliche Komponenten gegen den an der Abgabestelle (3) abgeworfenen Trester abschirmt.

2. Vorrichtung nach Anspruch 1, **dadurch gekennzeichnet, dass** das trichterartige Teil (5) mit einer ersten Wandung (7) an die Abgabestelle (3) der Brühgruppe (2) mindestens nahezu spaltfrei angeschlossen ist.

3. Vorrichtung nach Anspruch 1 oder 2, **dadurch gekennzeichnet, dass** das trichterartige Teil (5) mit einer der ersten Wandung (7) gegenüberliegenden zweiten Wandung (8) über eine Lagerkante (9) des Gehäuses (1) oder der Brühgruppe (2) greift und auf dieser abgestützt ist.

4. Vorrichtung nach Anspruch 3, **dadurch gekennzeichnet, dass** an der zweiten Wandung (8) eine Griffkante (10) zur Manipulation des trichterartigen Teils (5) ausgebildet ist.

5. Vorrichtung nach einem der Ansprüche 2 bis 4, **dadurch gekennzeichnet, dass** die erste und zweite Wandung (7,8) des trichterartigen Teils (5) durch Seitenwandungen miteinander verbunden sind.

6. Vorrichtung nach einem der Ansprüche 1 bis 5, **dadurch gekennzeichnet, dass** im vom trichterartigen Teil (5) gebildeten Durchlass für den Trester mindestens ein Steg (11) ausgebildet ist, mittels dessen der von der Abgabestelle (3) der Brühgruppe (2) abgeworfene Trester zerteilt wird.

7. Vorrichtung nach Anspruch 6, **dadurch gekennzeichnet, dass** der Steg (11) mittig im Durchlass des trichterartigen Teils (5) ausgebildet ist.

8. Vorrichtung nach Anspruch 6 oder 7, **dadurch gekennzeichnet, dass** der Steg (11) am in Fallrichtung des Tresters hinteren Endbereich des Durchlasses vorgesehen ist.

9. Vorrichtung nach einem der Ansprüche 6 bis 8, **dadurch gekennzeichnet, dass** der Steg (11) eine Handhabe zur Manipulation des trichterartigen Teils (5) bildet.

10. Vorrichtung nach einem der Ansprüche 6 bis 9, **dadurch gekennzeichnet, dass** der Steg (11) parallel zu den Seitenwandungen des trichterartigen Teils (5) ausgerichtet verläuft.

11. Vorrichtung nach einem der Ansprüche 6 bis 10, **dadurch gekennzeichnet, dass** der Steg (11) zur Abgabestelle (3) der Brühgruppe (2) hin scharfkantig ausgebildet ist.

12. Vorrichtung nach einem der Ansprüche 1 bis 11, **dadurch gekennzeichnet, dass** das Gehäuse (1) eine mittels eines Gehäuseteils verschließbare Öffnung (12) aufweist, hinter der das trichterartige Teil (5) angeordnet und bei freigelegter Öffnung zugreiflich ist.
